# EUROPEAN PATENT APPLICATION

(11) **EP 2 866 459 A1**
(43) Date of publication of application: **29.04.2015**
(21) Application number: 13190137.3
(22) Date of filing: 24.10.2013
(51) Int. Cl.: H04N 21/482

(54) **Method and device for selecting a channel in a electronic device for receiving broadcast programs**

(71) Applicant: TP Vision Holding B.V., 1097 JB Amsterdam (NL)
(72) Inventor: Selvaraj, Chakkaravarthi, 1097 JB Amsterdam (NL)
(74) Representative: Busch, Patrick

(57) **Abstract**

The invention relates to a method for selecting a channel in an electronic device, for example a TV-set or satellite receiver. The method comprising composing and/or storing a first list of program identifiers associated with respective program channels, the program identifier comprising a sequence of at least two characters, receiving a first character, composing a second list from the program identifiers of the first list of which program identifier a first character in the sequence is equal to the received first character, displaying the composed second list of the program identifiers, receiving an input for selecting one of the retrieved program identifiers from the second list and selecting a TV channel corresponding to the selected program identifier.

## Description

### FIELD OF THE INVENTION

The invention relates to a method and device for selecting a channel in an electronic device for receiving broadcast programs, for example a TV-set or a satellite receiver

### BACKGROUND OF THE INVENTION

A method and device for selecting TV channels in a TV-set is known from WO2010/039582.

That document discloses a TV-set that has stored multiple previously viewed channels for selective recall by a user. The TV-set displays a selection menu that includes a plurality of previously viewed channels. The user selects one of the channels from the selection menu for viewing, and a tuner of the TV-set is controlled to output the selected channel. The selecting of the channel can be performed by entering the characters of a name of a channel via a remote control device.

A disadvantage of the known method is that the user has to enter all the digits or characters of the channel name. After entering all the characters or digits of the channel name the TV is tuned according to the selected channel name or the TV may display an error message that the channel according to the selected program identifier is not available.

### SUMMARY OF THE INVENTION

It is an object of the invention to provide an improved interactive method to select a channel from a channel list in an electronic device for receiving broadcast programs.

According to a first aspect of the invention this object is achieved in a method comprising
a) composing and/or storing a first list of program identifiers associated with respective program channels, the program identifiers comprising a sequence of at least two characters;
b) receiving a first character;
c) composing a second list from the program identifiers of the first list, of which program identifier a first character in the sequence is equal to the received first character;
d) displaying the composed second list of program identifiers;
e) selecting a channel based on a further input.

In this way the user can enter, for example, a first character, corresponding to the first character in the sequence of a program identifier or names in a list of available channels or corresponding to a list of favorite channels, a viewer wishes to select. After updating and displaying the updated list, the user can enter a further subsequent character of the program identifier of the channel to be selected. The list can be updated and displayed again. By repeating these steps the updated list contains one or a few program identifiers which are easy to select for example by moving a highlight or a cursor towards a selected identifier. So, an improved interactive user interface is provided wherein a user can select one of the available channels.

In an embodiment the method for selecting of one of the retrieved program identifiers from the second list comprises
f) receiving a further character;
g) updating the second list with program identifiers from the second list for which program identifier a subsequent character in the sequence is equal to the received further character;
h) displaying the updated second list.
In this way a reduced list of identifiers and corresponding channel names can be composed and displayed.

In an embodiment of the method selecting of one of the program identifiers from the second list comprises
i) repeating steps f) to h) until the second list contains a single program identifier.
In this way the second list can be reduced to one or a few program identifiers.

In a further embodiment of the method wherein selecting of one of the program identifiers of the second list comprises
j) marking one of the displayed program identifiers of the second list;
k) receiving a user input for relocation of the marker to a subsequent program identifier in the displayed second list;
1) repeating step k) until a selected program identifier is marked.
By marking, for example, highlighting and moving the highlight the program identifier that is presently selected by the user can be distinguished and selected from the other program identifiers in the list.

In a further embodiment of the method the first list is a favorite channel list, a recently watched list or an all channel list. The favorite channel list is a list of the most favorite channels of a user of the electronic device. The recently watched is a list recently watched channels and the all channel list is a list of all channels available in the electronic device. By displaying one of the list a viewer can make a quick selection of one of the program identifiers in the displayed list.

In a further embodiment of the method updating the second list comprises ordering the second list according to a stored favorite channel list, a stored recently watched channel list or a stored all channel list.

According to a second aspect of the invention the above mention object is achieved in a electronic device comprising a channel selecting device, a display device, an input device for receiving characters and a processor, wherein the processor is arranged to control the channel selecting unit, the display device and the input device, wherein the processer is further arranged to
a) compose and/or store a first list of program identifiers associated with respective program channels, the program identifier comprising a sequence of at least two characters;
b) receive a first character from the input device;
c) compose a second list from the program identifiers of the first list for which program identifier the first character in the sequence is equal to the received first character;
d) display the composed second list of the program identifiers on the display device;
e) selecting a channel based on a further input.

In a further embodiment of the electronic device the processor is further arranged to
f) receive a further character from the key board device;
g) update the second list with the program identifiers from the second list of which program identifier a subsequent character in the sequence is equal to the received further character;
h) display the updated second list;

In a further embodiment of the electronic device the processor is further arranged to i repeat steps g) to i) until the second list contains a single program identifier.

In a further embodiment of the TV-set the processor is further arranged to
j) marking one of the displayed program identifiers of the second list;
k) receive a user input for relocation of the marker to a subsequent program identifier in the displayed second list;
1) repeat step k) until a selected program identifier is marked.
Further advantageous embodiments are defined in the dependent claims.

### BRIEF DESCRIPTION OF THE DRAWINGS

The above and other, more detailed aspects of the invention will be elucidated and described hereinafter, by way of example, with reference to the accompanying drawing.

Therein:
Fig. 1 displays a flowchart illustrating a method for selecting channels in an electronic device according to a first embodiment of the invention,
Fig. 2 displays a flow chart illustrating a method for selecting channel in an electronic device according to a second embodiment of the invention,
Fig. 3 shows an example of reducing a list of program identifiers according to the method of the invention, and
Fig. 4 shows an example of an electronic device for according to the invention.

### DETAILED DESCRIPTION OF EMBODIMENTS OF THE INVENTION

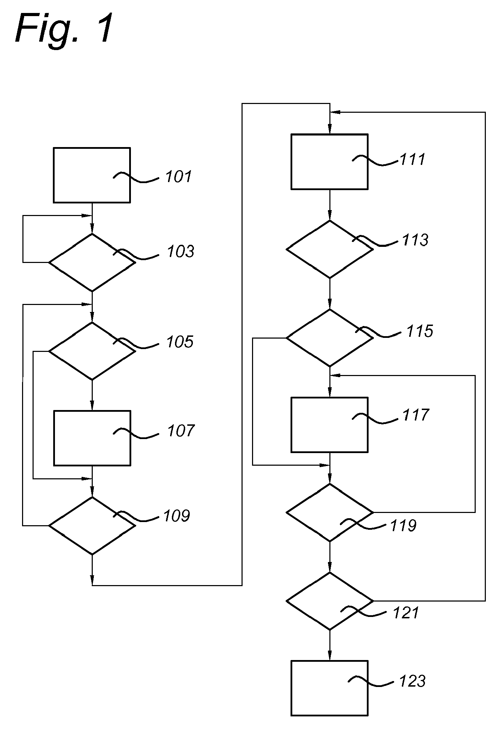

Fig. 1 displays a flowchart 100 illustrating a method for selecting a channel in an electronic device for receiving broadcast programs according to a first embodiment of the invention. The electronic device can be for example a TV-set, a satellite receiver or a set top box.

In a first optional step 101 of the method a first list of program identifiers of a number M, for example 25 of available channels in the TV-set can be displayed. A program identifier of the first list contains a sequence of an integer number ofN characters. For example three character or digits. The first list can also be composed from a stored list of program identifiers of most favorite channels, recently watched channels.

In step 103 a first character or digit is received. The first character or digit can be entered via, an input device for example, a touch screen or keyboard of a portable electronic device, such as, a remote control, a tablet computer or smartphone.
Subsequently, a second list is composed by adding the program identifiers of the first list of which program identifier the first character is equal to the received character. Thereto in step 105 the received character or digit is compared with the first character of the sequence of the first of respective M program identifiers of the displayed first list. In case the first character or digit of the sequence of a program identifier is equal to the received character or digit, that program identifier is stored in the second list in step 107. The steps of comparing the received character and storing of the program identifier of the first character or string is equal with the received character or digit, can be repeated for the 25 program identifiers of the first list in step 109. Hereafter, the second list comprises the program identifiers of the first list from which program identifiers the first character in the sequence is equal to the received first character. Alternatively, after receiving the first character the TV-set may predict and auto fill all characters of the program identifier based on the received character and the first list of the program identifiers and display in down light the characters of the predicted program identifier on the display

Subsequently, in step 111, the second list is displayed and the user can select one of the displayed program identifiers of the second list. The order of the program identifiers in the second list can be arranged according to priorities of the program identifiers in a stored favorite channel list, a most recently watched channel list or an all channel list.

Additionally, a channel name linked to the program identifier can be stored in the second list.

Alternatively, when the second list is available, the TV-set can be automatically tuned to the channel corresponding to the first program identifier in the second list.

An updated second list can now composed from the second list by receiving a second character entered via the keyboard by the user 115 and comparing the received second character with the second character of the sequence of program identifiers in the second list. The second list can now be updated with program identifiers from the second list, of which program identifiers the second character in the sequence is equal to the received second characters in step 115 and 117. The steps 111 - 117 are repeated for the program identifiers of the second list, step 119. Hereafter, an updated second list is obtained of the program identifiers in which a subsequent character in the sequence is equal to the received further character. The updated second list is displayed in step 111.

In case, a delete or backspace key is received, the second list is updated according to the last minus one received key.

If the received key is not equal to the subsequent character of one of the sequences of program identifiers in the second list, the method returns to step 113.
The steps 111-121 can be repeated until the updated second list contains a single program identifier. In this case the single program identifier can be automatically selected. In a further step 123 the TV-set can be automatically tuned to the channel according to the selected program identifier.

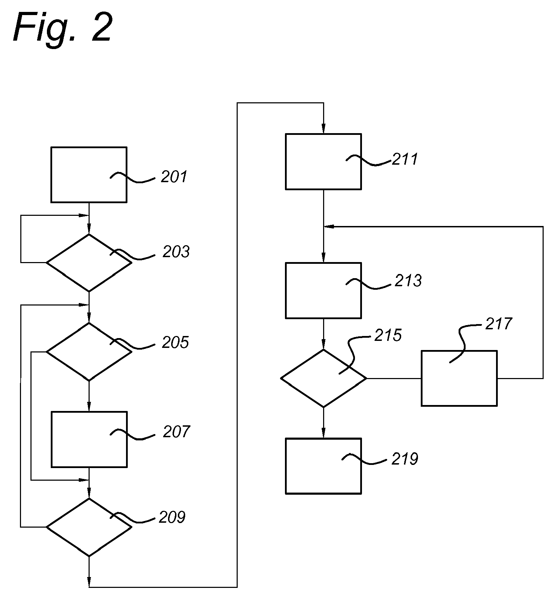

Fig. 2 displays a flow chart 200 representing steps in a method for controlling a TV-set according to a second embodiment of the invention.

Steps 201-211 are similar to the steps 101- 111 described with the embodiment related to Fig.1.

After the second list is displayed in step 211, a first program identifier is marked, for example by highlighting or downlighting the first program identifier, for example, the upper program identifier in the displayed second list in step 213. The user can then select one of the program identifiers of the second list by relocating the highlight to one of the other program identifiers in the displayed second list by moving the highlight using the ↓, ↑ keys of the keyboard. If the highlight is at the selected program identifier the user can enter the OK button of the keyboard.

In step 215 the received character is compared with the ↑, ↓ key or OK key, when the character is equal to the ↑, ↓ key the highlight is reallocated to an adjacent program identifier in step in the displayed second list 217 and the program returns to step 213. If the received character is equal to the OK key, the program proceeds to step 219 wherein the TV-set is automatically tuned to the channel according to the selected program identifier.

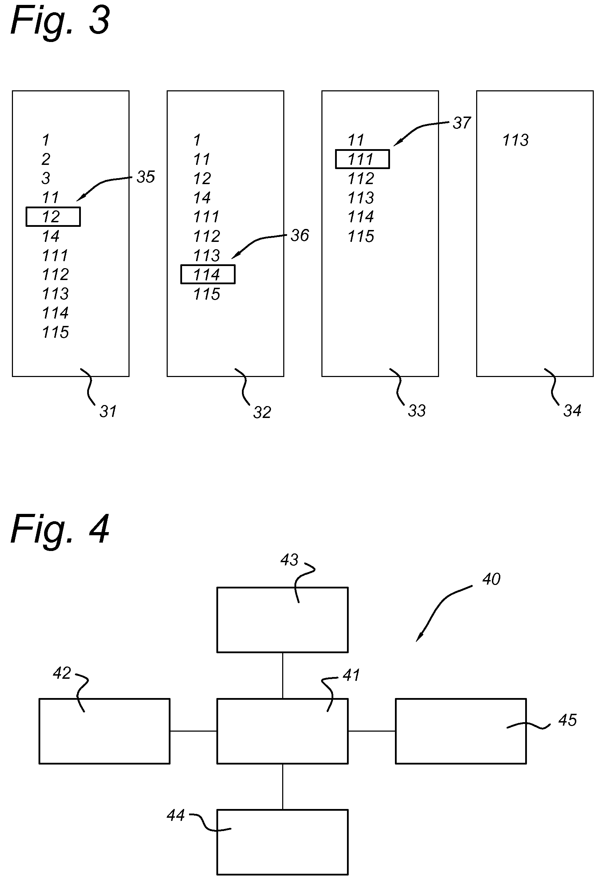

Fig. 3 shows an example of a reducing a list of program identifiers according to the method of the invention. A first list 31 shows a list of program identifiers comprising sequences of one, two and three characters or digits. A second, updated, list 32 shows a list of program identifiers of which the first character in the sequence is equal to the received first character. A third, updated, list 33 shows a list of program identifiers of which the first and second character of the sequence are equal to the received first and second character. A fourth, updated, list 34 shows a program identifier for which the first, second and third character of the sequence are equal to the received first, second and third character and results in channel name of the selected channel.

Furthermore, Fig. 3 shows respective highlights related the program identifiers or channel names in the first list 31, the second updated list 32 and third updated list 33, the highlight indicating the program identifier in the updated lists to be selected by a user. Fig. 4 shows an example of an electronic device in which the method can be implemented.

The electronic device 40 may comprise a processor 41, an input device 42 that can be connected wirelessly to the TV-set, a channel selecting unit 43 connected to the processor 41 and a display device 45 connected to the processor 41. The electronic device can be a TV-set or satellite receiver. The input device 42 can be a keyboard or touchscreen of a portable electronic device. For example a remote control. Alternatively a tablet computer or smart phone can be applied programmed with a program for receiving character and transmitting character to the electronic device 40. The display device 45 may comprise an LCD or an OLED display. Furthermore, the TV-set 40 comprises a memory 44 for storage of programs and data.

It should be noted that the above-mentioned embodiments illustrate rather than limit the invention, and that those skilled in the art will be able to design many alternative embodiments without departing from the scope of the appended claims.

Other variations to the disclosed embodiments can be understood and effected by those skilled in the art in practicing the claimed invention, from a study of the drawings, the disclosure and the appended claims, In the claims the word "comprising" does not exclude other elements or steps, and the indefinite article "a" or "an" does not exclude a plurality. A single processor or other unit may fulfill the functions of several item recited in the claims. The mere fact that certain messages are recited in mutually difference dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for selecting a channel in an electronic device for receiving broadcast programs comprising
a) composing and/or storing a first list of program identifiers associated with respective program channels, the program identifier comprising a sequence of at least two characters,
b) receiving a character;
c) if the received character is equal to a first one of the sequence of the program identifiers composing a second list from the program identifiers of the first list of which program identifier a character in the sequence is equal to the received first character;
d) displaying the composed second list of the program identifiers;
e) selecting a channel based on a further input.

2. Method according to claim 1, wherein selecting of one of the program identifiers from the second list comprises
f) receiving a further character;
g) updating the second list with program identifiers from the second list of which program identifier a subsequent character in the sequence is equal to the received further character;
h) displaying the updated second list;

3. Method according to claim 2, wherein the method comprises
i) repeating steps f) to h) until the second list contains a single program identifier.

4. Method according to any of the claims 1 - 3, wherein the selecting of one of the program identifiers of the second list comprises
j) marking one of the displayed program identifiers of the second list;
k) receiving a further user input for relocation of the marker to a subsequent program identifier in the displayed second list;
1) repeating step k) until a selected program identifier is marked;

5. Method according to any of the claims 1 - 4, wherein the first list is a favorite channel list, a recently watched list or an all channel list.

6. Method according to claim 2 or 3, wherein updating the second list comprises ordering the second list according to a stored favorite channel list, a stored recently watched channel list or a stored all channel list.

7. Method according to any of the claims 1-6. wherein displaying the first or the second list comprises displaying a channel name corresponding to the program identifiers.

8. Electronic device for receiving broadcast programs comprising a display device, a channel selecting unit, an input device for receiving characters and a processor, wherein the processor is arranged to control the channel selecting unit, the display device and the input device, wherein the processor is further arranged to
a) compose and/or store a first list of program identifiers associated with respective program channels, the program identifiers comprising a sequence of at least two characters.
b) receive a first character from the input device;
c) compose a second list comprising the program identifiers of the first list of which program identifiers the first character in the sequence is equal to the received first character;
d) display the composed second list of the program identifiers on the display device;
e) selecting a channel based on a further input.

9. Electronic device according to claim 8, wherein the processor is further arranged to f) receive a further character from the input device;
g) update the second list with the program identifiers from the second list of which program identifier a subsequent character in the sequence is equal to the received further character;
h) display the updated second list;

10. Electronic device according to claim 8, wherein the processor is further arranged to
i) repeat steps f) to g) until the second list contains a single program identifier.

11. Electronic device according to claims 8 - 10, wherein the processor is further arranged to
j) marking one of the displayed program identifiers of the second list;
k) receive a user input for relocation of the marker to a subsequent program identifier in the displayed second list;
1) repeat step k) until a selected program identifier is marked.

12. Computer program product comprising computer program code means adapted to perform all the steps of any one of the method claims 1 to 7 when the computer program is run on a computer.
